# EUROPÄISCHE PATENTSCHRIFT

(11) **EP 0 708 012 B1**
(45) Veröffentlichungstag und Bekanntmachung des Hinweises auf die Patenterteilung: **09.07.1997**
(21) Anmeldenummer: 95116233.8
(22) Anmeldetag: 14.10.1995
(51) Int. Cl.: B62D 5/30

(54) **Hilfskraftlenkung für Kraftfahrzeuge**
Power steering for motor vehicles
Direction assistée pour véhicules à moteur

(30) Priorität: 21.10.1994 DE 4437613
(43) Veröffentlichungstag der Anmeldung: 24.04.1996
(73) Patentinhaber: ZF FRIEDRICHSHAFEN Aktiengesellschaft, 88038 Friedrichshafen (DE)
(72) Erfinder: Braun, Andreas, D-90763 Fürth (DE); Elser, Dieter, D-73547 Essingen (DE)

(56) Entgegenhaltungen:
- EP-A- 0 147 949
- EP-A- 0 181 514
- EP-A- 0 225 993
- WO-A-87/06900
- PATENT ABSTRACTS OF JAPAN vol. 13 no. 45 (M-792) ,2.Februar 1989 & JP-A-63 251368 (HINO MOTORS) 18.Oktober 1988,

## Beschreibung

Die Erfindung betrifft eine Hilfskraftlenkung für Kraftfahrzeuge, nach dem Oberbegriff des Anspruches 1. Eine solche Hilfskraftlenkung enthält wenigstens zwei voneinander getrennte Hilfskraftkreise, von denen wenigstens der erste einen Servomotor mit einem Kolben enthält, der in einem Zylinder durch die Kraft eines hydraulischen Druckmittels verschiebbar ist. Zum Steuern des hydraulischen Druckmittels zu und von den beiden Druckräumen des Servomotors dient ein Steuerventil. In einem mechanischen Verbindungsstrang zwischen einem Lenkhandrad und den zu lenkenden Fahrzeugrädern dient ein Lenkgetriebe zum Umwandeln einer Drehbewegung einer Lenkspindel in eine hin- und hergehende Bewegung des Kolbens.

Eine derartige Hilfskraftlenkung ist beispielsweise bekannt aus der DE-C2-29 18 975. Gemäß dieser Ausbildung enthält der erste Hilfskraftkreis einen unmittelbar in einem Lenkgetriebegehäuse eingebauten, auf ein Lenksegment einwirkenden Arbeitskolben, der als Steuerventil ein Drehschieberventil aufweist. Der zweite Hilfskraftkreis enthält einen separaten, an ein Lenkgestänge des Kraftfahrzeuges angeschlossenen hydraulischen Stellmotor. Dieser Stellmotor ist durch ein weiteres Drehschieberventil ansteuerbar. Jedes Drehschieberventil steht mit einer vom Fahrzeugmotor angetriebenen Pumpe in Verbindung. Die beiden Hilfskraftkreise sind dabei vollständig voneinander getrennt, so daß sich das Kraftfahrzeug beim Ausfall eines Aggregates, z. B. einer der beiden Pumpen, mit Hilfe des anderen noch intakten Hilfskraftkreises, wenn auch mit höherem Handkraftanteil, aus dem Verkehr lenken läßt.

Eine solche, allgemein als Zweikreislenkung bezeichnete Hilfskraftlenkung verfügt über eine Verdoppelung sämtlicher hydraulischer Bauteile, woraus sich ein erheblicher Bauaufwand ergibt. Der Einbau eines zusätzlichen Stellmotors im Bereich der Lenkachse ist oft mit Raumproblemen verbunden. Die Notwendigkeit von stabilen Anlenkpunkten am Fahrzeugrahmen und die Installation von langen Druckschläuchen für diesen Stellmotor erfordern einen zusätzlichen Mehraufwand. Da das Öl in dem zusätzlichen Hilfskraftkreis ständig umgewälzt wird, ergeben sich außerdem unnötige Durchlaufverluste.

Bei einer anderen Ausführung von Zweikreislenkungen wird nur eine der beiden Pumpen vom Fahrzeugmotor angetrieben. Die zweite Pumpe dagegen wird vom Antriebsstrang angetrieben. Dies bedeutet, daß beim Lenken im Stand, wenn die zweite Pumpe nicht angetrieben wird und damit nicht fördert, der zweite Hilfskraftkreis nicht zur Unterstützung der Lenkbewegungen beiträgt.

Der Erfindung liegt die Aufgabe zugrunde, den Aufbau einer Hilfskraftlenkung, die aus Sicherheitsgründen mit zwei voneinander unabhängigen Hilfskraftkreisen ausgerüstet sein muß, einfacher zu gestalten und den Einbau in das Fahrzeug zu verbilligen. Außerdem soll ein System geschaffen werden, bei dem der zweite Hilfskraftkreis auch beim Lenken im Stand aktivierbar ist.

Diese Aufgabe wird durch die im Anspruch 1 gekennzeichnete Hilfskraftlenkung gelöst. Erfindungsgemäß wird der zweite Hilfskraftkreis als Pneumatikkreis ausgeführt, der einen durch die Kraft eines pneumatischen Druckmittels antreibbaren Servomotor mit einer zugehörigen Steuereinrichtung enthält. Im allgemeinen Anwendungsfall der Hilfskraftlenkung für Kraftfahrzeuge kann bei dieser Ausführung zumindest der Ölbehälter entfallen. Wird die Hilfskraftlenkung insbesondere bei Nutzfahrzeugen angewendet, bei denen eine pneumatische Energiequelle bereits verfügbar ist, so vereinfacht sich der Aufbau des zweiten Hilfskraftkreises weiter.

Weitere vorteilhafte und zweckmäßige Ausgestaltungen sind in den Unteransprüchen angegeben.

Das Lenkgetriebe der Hilfskraftlenkung kann sowohl als Kugelumlaufgetriebe als auch als Zahnstangengetriebe ausgebildet sein. Eine Abtriebswelle des pneumatischen Servomotors kann dann direkt mit einer Gewindespindel des Kugelumlaufgetriebes oder mit dem Ritzel des Zahnstangengetriebes verbunden sein. Dadurch entfällt ein zusätzlicher separater Stellmotor mit seinen notwendigen Befestigungspunkten am Fahrzeugrahmen.

Je nach verfügbarem Einbauraum kann der pneumatische Servomotor an dem Lenkgetriebe auf der der Lenkspindel zugewandten Seite oder auf der der Lenkspindel abgewandten Seite angeordnet sein. Sofern am unteren Ende des Lenkgetriebes in Fortsetzung der Gewindespindel oder des Ritzels kein Platz vorhanden ist, so kann der pneumatische Servomotor parallel zu der Gewindespindel bzw. zu dem Ritzel angeordnet sein und über ein mechanisches Untersetzungsgetriebe mit der Gewindespindel bzw. dem Ritzel verbunden sein. Das Untersetzungsgetriebe kann als Zahnradgetriebe oder als Kettengetriebe ausgebildet sein.

Im folgenden wird die Erfindung anhand dreier in der Zeichnung dargestellter Ausführungsbeispiele näher erläutert. Es zeigen:
- Fig. 1: eine Hilfskraftlenkung, bei der der pneumatische Servomotor auf der der Lenkspindel zugewandten Seite des Lenkgetriebes angeordnet ist;

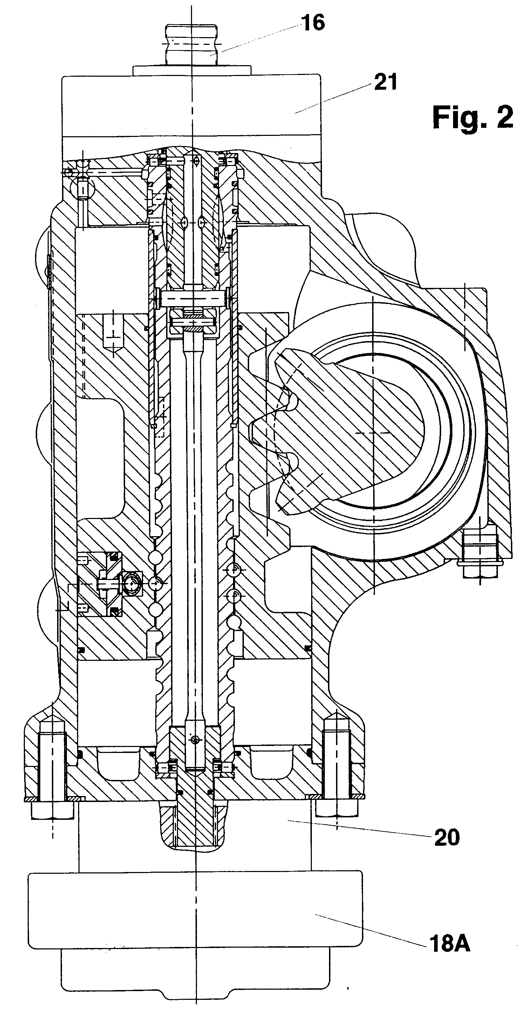

- Fig. 2: eine Hilfskraftlenkung, bei der der pneumatische Servomotor auf der der Lenkspindel abgewandten Seite des Lenkgetriebes angeordnet ist und
- Fig. 3: eine Hilfskraftlenkung, bei der der pneumatische Servomotor parallel zu der Lenkspindel des Lenkgetriebes angeordnet ist.

Ein Lenkgetriebe in der Form eines Kugelumlaufgetriebes weist in einem Lenkgehäuse 1 eine Gewindespindel 2 auf. Die Gewindespindel 2 steht über eine Kugelumlaufkette 3 in trieblicher Verbindung mit einer Kugelmutter 4, die einen Kolben 5 trägt. Der Kolben 5 trennt zwei in dem Lenkgehäuse 1 angeordnete Arbeitsräume 6 und 7 eines Servomotors 8. Die Kugelmutter 4 steht außerdem über eine Verzahnung 10 mit einem auf einer Lenkwelle 11 angeordneten Lenksegment 12 in Eingriff.

Ein hydraulisches Druckmittel, das eine Servopumpe 13 aus einem Behälter 14 fördert, wird über ein Steuerventil 15 zu und von den beiden Arbeitsräumen 6 und 7 des Servomotors 8 gesteuert. Das Steuerventil 15 ist beispielsweise als Drehschieberventil ausgebildet, dessen eines Ventilelement mit der Gewindespindel 2 und dessen anderes Ventilelement mit einer Lenkspindel 16 verbunden ist. Beide Teile sind miteinander über einen Drehstab 17 verbunden.

Wenn die Lenkspindel 16 gedreht wird, so dreht sich ebenfalls die Gewindespindel 2. Diese Drehbewegung wird über die Kugelumlaufkette 3 und die Kugelmutter 4 in eine hin- und hergehende Bewegung des Kolbens 5 umgewandelt. Die Bewegung des Kolbens 5 wird durch das von der Servopumpe 13 aus dem Behälter 14 über das Steuerventil 15 geförderte hydraulische Druckmittel verstärkt. Die zuletzt genannten Teile bilden zusammen den ersten Hilfskraftkreis.

Der zweite Hilfskraftkreis enthält einen Servomotor 18, der über eine zugehörige Steuereinrichtung durch die Kraft eines pneumatischen Druckmittels angetrieben wird.

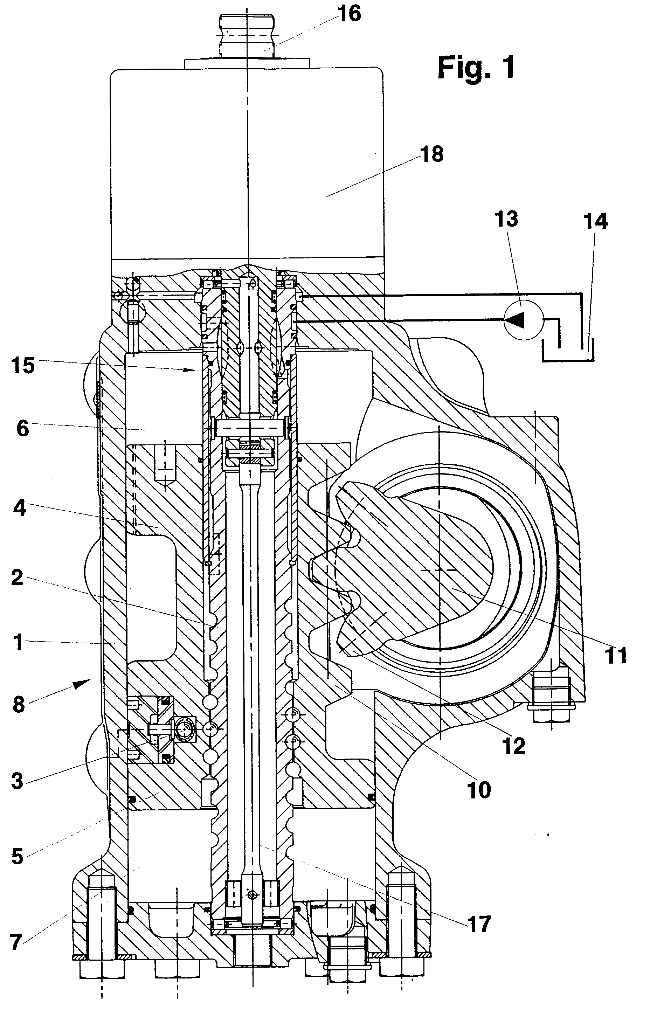

In dem Ausführungsbeispiel der Fig. 1 ist der pneumatische Servomotor 18 an der der Lenkspindel 16 zugewandten Seite des Lenkgetriebes angeordnet. Der Servomotor 18 ist nur schematisch dargestellt und ist mit einer Steuereinrichtung und einem Untersetzungsgetriebe zusammengebaut. Wenn der Servomotor 18, wie in Fig. 1 dargestellt, an der der Lenkspindel 16 zugewandten Seite des Lenkgetriebes angeordnet ist, so kann in vorteilhafter Weise eine Seitenrichtungsansteuerung des Servomotors in diesem integriert werden.

Besteht jedoch im Bereich der Lenkspindel 16 nur wenig Platz, so kann der Servomotor 18A am unteren Ende des Lenkgetriebes, d. h. an der der Lenkspindel 16 abgewandten Seite, angebaut werden. In diesem Fall ist mit dem Servomotor 18A nur ein Untersetzungsgetriebe 20 zusammengebaut. Das Untersetzungsgetriebe 20 kann beispielsweise ein Zahnradgetriebe oder ein Kettengetriebe sein. Eine Steuereinrichtung 21 ist nach wie vor auf der der Lenkspindel 16 zugewandten Seite des Lenkgetriebes angeordnet. Diese Anordnung des pneumatischen Servomotors 18A ist besonders vorteilhaft, wenn im unteren Bereich des Lenkgetriebes genügend Platz vorhanden ist.

Besteht jedoch auch dort kein ausreichender Einbauraum für den Servomotor, so kann der pneumatische Servomotor 18B parallel zu der Gewindespindel 2 des Lenkgetriebes angeordnet sein. Eine Abtriebswelle 22 des Servomotors 18B ist mit der Gewindespindel 2 durch ein Untersetzungsgetriebe 20B verbunden. Die Steuereinrichtung 21B ist zweckmäßigerweise auch in diesem Ausführungsbeispiel auf der der Lenkspindel 16 zugewandten Seite des Lenkgetriebes angeordnet.

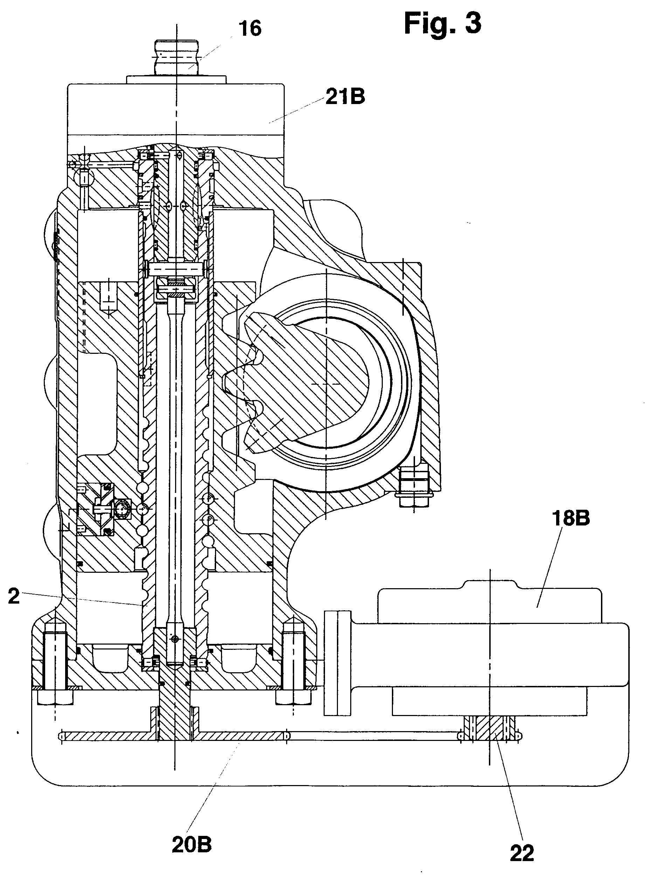

In Fig. 3 ist der pneumatische Servomotor 18B und das Untersetzungsgetriebe 20B im unteren Bereich des Lenkgetriebes angeordnet. Es ist jedoch bei entsprechenden Einbauverhältnissen auch möglich, diese beiden Teile im oberen Bereich des Lenkgetriebes, d. h. auf der der Lenkspindel 16 zugewandten Seite des Lenkgetriebes, anzuordnen.

Die Erfindung wurde bis hierher am Beispiel einer Hilfskraftlenkung mit einem Kugelumlaufgetriebe beschrieben. Mit gleicher Wirkung und mit gleichen Vorteilen kann der zweite Hilfskraftkreis mit einem pneumatischen Servomotor jedoch auch bei einer Hilfskraftlenkung mit einem Zahnstangengetriebe angewendet werden. Ein solches Getriebe ist allgemein bekannt und muß deshalb nicht gesondert dargestellt werden. Der einzige Unterschied zwischen diesen beiden Ausführungsformen ist, daß bei der Verwendung eines Kugelumlaufgetriebes die Abtriebswelle des pneumatischen Servomotors mit der Gewindespindel des Kugelumlaufgetriebes verbunden ist, während bei Verwendung eines Zahnstangengetriebes die Abtriebswelle des pneumatischen Servomotors mit dem Ritzel des Zahnstangengetriebes verbunden ist. Alle übrigen Merkmale, insbesondere auch die verschiedenen Anordnungen des pneumatischen Servomotors in bezug auf das Lenkgetriebe, lassen sich entsprechend übertragen.

## Patentansprüche

1. Hilfskraftlenkung für Kraftfahrzeuge, insbesondere Nutzfahrzeuge,
- mit wenigstens zwei voneinander getrennten Hilfskraftkreisen, von denen wenigstens der erste einen Servomotor (8) mit einem durch die Kraft eines hydraulischen Druckmittels verschiebbaren Kolben (5) enthält;
- mit einem Steuerventil (15) zum Steuern des hydraulischen Druckmittels zu und von den beiden Arbeitsräumen (6, 7) des Servomotors (8);
- mit einem Lenkgetriebe zum Umwandeln einer Drehbewegung einer Lenkspindel (16) in eine hin- und hergehende Bewegung des Kolbens (5),
dadurch **gekennzeichnet,** daß der zweite Hilfskraftkreis einen durch die Kraft eines pneumatischen Druckmittels antreibbaren Servomotor (18) mit einer zugehörigen Steuereinrichtung (21) enthält.

2. Hilfskraftlenkung nach Anspruch 1, dadurch **gekennzeichnet,** daß das Lenkgetriebe ein Kugelumlaufgetriebe ist mit einer von der Lenkspindel (16) antreibbaren Gewindespindel (2), einer Kugelmutter (4) und einer dazwischenliegenden Kugelumlaufkette (3), wobei der Kolben (5) mit der Kugelmutter (4) verbunden und eine Abtriebswelle (22) des pneumatischen Servomotors (18) mit der Gewindespindel (2) des Kugelumlaufgetriebes verbunden ist.

3. Hilfskraftlenkung nach Anspruch 1, dadurch **gekennzeichnet,** daß das Lenkgetriebe ein Zahnstangengetriebe ist mit einem von der Lenkspindel antreibbaren Ritzel und einer Zahnstange, die mit dem Ritzel kämmt, wobei die Abtriebswelle des pneumatischen Servomotors mit dem Ritzel verbunden ist.

4. Hilfskraftlenkung nach einem der Ansprüche 2 oder 3, dadurch **gekennzeichnet,** daß der pneumatische Servomotor (18) auf der der Lenkspindel (16) zugewandten Seite des Lenkgetriebes angeordnet ist.

5. Hilfskraftlenkung nach einem der Ansprüche 2 oder 3, dadurch **gekennzeichnet,** daß der pneumatische Servomotor (18) auf der der Lenkspindel (16) abgewandten Seite des Lenkgetriebes angeordnet ist.

6. Hilfskraftlenkung nach Anspruch 2, dadurch **gekennzeichnet,** daß der pneumatische Servomotor (18) parallel zu der Gewindespindel (2) des Kugelumlaufgetriebes angeordnet und über ein mechanisches Untersetzungsgetriebe (20) mit der Gewindespindel (2) verbunden ist.

7. Hilfskraftlenkung nach Anspruch 3, dadurch **gekennzeichnet,** daß der pneumatische Servomotor parallel zu dem Ritzel des Zahnstangengetriebes angeordnet und über ein mechanisches Untersetzungsgetriebe mit dem Ritzel verbunden ist.

8. Hilfskraftlenkung nach einem der Ansprüche 6 oder 7, dadurch **gekennzeichnet,** daß das Untersetzungsgetriebe ein Zahnradgetriebe oder ein Kettengetriebe ist.

## Claims

1. A power-assisted steering system for motor-vehicles, in particular commercial vehicles
- provided with at least two separate hydraulic circuits, of which at least the first of said hydraulic circuits contains a servomotor (8) with a piston (5) which is displaceable by hydraulic pressure means;
- provided with a control valve (15) for controlling the hydraulic pressure means flowing to and from the two working chambers (6, 7) of the said servomotor (8);
- provided with a steering gear mechanism to convert the rotary motion of a steering shaft (16) into the up and down motion of the said piston (5),
characterised in that the second of said hydraulic circuits contains a servomotor (18) which is driveable by pneumatic pressure means and is equipped with a control device (21).

2. A power-assisted steering system as per claim 1, characterised in that the said steering gear mechanism is a recirculating ball mechanism provided with a threaded spindle (2) which is driveable by the steering shaft (16), with a ball and nut mechanism (4) and with an intermediately located recirculating ball chain (3), wherein the piston (5) is connected to the said ball and nut mechanism (4), and in that an output shaft (22) of the pneumatic servomotor (18) is connected to the said threaded spindle (2) of the recirculating ball mechanism.

3. A power-assisted steering system as per claim 1, characterised in that the steering gear mechanism is a rack-and-pinion mechanism provided with a pinion which is driveable by the steering shaft and with a toothed rack which engages with the pinion, wherein the output shaft of the pneumatic servomotor is connected to the pinion.

4. A power-assisted steering system as per one of the above claims 2 or 3, characterised in that the pneumatic servomotor (18) is arranged on the side of the steering gear mechanism which faces towards the steering shaft (16).

5. A power-assisted steering system as per one of the above claims 2 or 3, characterised in that the pneumatic servomotor (18) is arranged on the side of the steering gear mechanism which faces away from the steering shaft (16).

6. A power-assisted steering system as per claim 2, characterised in that the pneumatic servomotor (18) is arranged in parallel to the threaded spindle (2) of the recirculating ball mechanism and is connected to said threaded spindle (2) via a mechanical reduction gear mechanism (20).

7. A power-assisted steering system as per claim 3, characterised in that the pneumatic servomotor is arranged in parallel to the pinion of the rack-and-pinion mechanism and is connected to the pinion via a mechanical reduction gear mechanism.

8. A power-assisted steering system as per one of the above claims 6 or 7, characterised in that the reduction gear mechanism is either a gearing mechanism or a chain mechanism.

## Revendications

1. Direction assistée pour véhicules automobiles, en particulier pour véhicules utilitaires, disposant
- d' au moins deux circuits d'assistance séparés l'un de l'autre, desquels au moins le premier comporte un moteur assisté (8) pourvu d'un piston (5) déplaçable par la force d'un fluide hydraulique;
- d' une soupape de commande (15) pour piloter le fluide hydraulique allant vers et venant des deux chambres de travail (6,7) du moteur assisté (8);
- d' un boîtier de direction pour convertir un mouvement de torsion d'une colonne de direction (16) en un mouvement cyclique du piston (5);
**caractérisée** en ce que le deuxième circuit de direction comporte un moteur assisté (18) avec un dispositif de commande correspondant (21) actionnable par la force d'un fluide de pression hydraulique.

2. Direction assistée selon la revendication 1,
**caractérisée** en ce que le boîtier de direction est une boîte à circulation de billes pourvue d' une broche filetée (2) actionnable à travers la colonne de direction (16), d' un écrou sphérique (4) et d' une chaîne à circulation de billes (3) interposée, et **caractérisée** en ce que le piston (5) est relié à un écrou sphérique (4) et que l'arbre de sortie (22) du moteur servoassisté (18) est relié à la broche filetée (2) de la boîte à circulation de billes.

3. Direction assistée selon la revendication 1,
**caractérisée** en ce que la boîte de direction est une boîte à crémaillère pourvue d'un pignon actionnable à travers la colonne de direction et d' une crémaillère qui engrène avec le pignon, et en ce que l'arbre de sortie du moteur assisté pneumatique est relié au pignon.

4. Direction assistée selon une des revendications 2 ou 3,
**caractérisée** en ce que le moteur asssité (18) pneumatique est disposé du coté de la boîte de direction qui est dirigée vers la colonne de direction (16).

5. Direction assistée selon une des revendications 2 ou 3,
**caractérisée** en ce que le moteur assisté pneumatique (18) est disposé du coté de la boîte de direction détourné de la colonne de direction (16).

6. Direction assistée selon la revendication 2,
**caractérisée** en ce que le moteur assisté pneumatique (18) est disposé parallèlement par rapport à la broche filetée (2) de la boîte à circulation de billes et en ce qu'il est relié à travers un démultiplicateur mécanique (20) à la broche filetée (2).

7. Direction assistée selon la revendication 3,
**caractérisée** en ce que le moteur assisté pneumatique est disposé parallèlement par rapport au pignon de la boîte à crémaillère et en ce qu'il est relié à travers un démultiplicateur mécanique au pignon.

8. Direction assistée selon une des revendications 6 ou 7,
**caractérisée** en ce que le démultiplicateur est une boîte à engrenages ou un engrenage à chaîne.
